# EUROPEAN PATENT APPLICATION

(11) **EP 4 848 323 A1**
(43) Date of publication of application: **02.12.2026**
(21) Application number: 24921378.6
(22) Date of filing: 19.08.2024
(51) Int. Cl.: H01H 71/02, H01H 73/18, H02B 1/04

(54) **CIRCUIT BREAKER AND ELECTRICAL DEVICE**

(30) Priority: 30.01.2024 CN 202410135425
(71) Applicant: Huawei Digital Power Technologies Co., Ltd., Shenzhen, Guangdong 518043 (CN)
(72) Inventor: SUN, Jisheng, Shenzhen, Guangdong 518043 (CN); LIAO, Chuancan, Shenzhen, Guangdong 518043 (CN); GUI, Xin, Shenzhen, Guangdong 518043 (CN); ZHANG, Xiufeng, Shenzhen, Guangdong 518043 (CN); ZHAO, Fugao, Shenzhen, Guangdong 518043 (CN); XIA, Quanfei, Shenzhen, Guangdong 518043 (CN)
(74) Representative: Huawei European IPR
(86) International application number: PCT/CN2024/113085
(87) International publication number: WO 2025/161352

(57) **Abstract**

This application provides a circuit breaker and an electric power device. The circuit breaker includes a housing and an operating handle, an operating mechanism, a current-carrying component, and an arc-quenching chamber that are sequentially disposed in the housing in a depth direction of the circuit breaker. The operating mechanism includes two mounting plates, a lock assembly, and at least one group of operating assemblies. The operating assembly includes a jump buckle, an upper connecting rod, a lower connecting rod, and a spring. In a height direction of the circuit breaker, the lock assembly is located on one side of a center of rotation of the jump buckle, and the upper connecting rod and the lower connecting rod are located on the other side of the center of rotation. The mounting plate is provided with a position limiting post, configured to limit rotation of the jump buckle and the upper connecting rod when the lock assembly unlocks the jump buckle. The upper connecting rod is provided with a position limiting post, configured to limit a rotating angle of the jump buckle during switching-on or switching-off. The mechanisms of the circuit breaker are disposed in the depth direction, so that a size in the height direction is small. In addition, the operating mechanism is of a simple structure to implement locking and unlocking functions, thereby facilitating miniaturization of the circuit breaker and increasing a quantity of circuit breakers that can be arranged in a cabinet.

## Description

### CROSS-REFERENCE TO RELATED APPLICATIONS

This application claims priority to Chinese Patent Application No. 202410135425.7, filed with the China National Intellectual Property Administration on January 30, 2024 and entitled "CIRCUIT BREAKER AND ELECTRIC POWER DEVICE", which is incorporated herein by reference in its entirety.

### TECHNICAL FIELD

This application relates to the field of communication device technologies, and in particular, to a circuit breaker and an electric power device.

### BACKGROUND

As technologies such as artificial intelligence (artificial intelligence, AI), 5.5G, and autonomous driving are gradually applied in people's daily life and work, these technologies pose significantly increasing requirements on computing capabilities. A data center, as a key field supporting by the computing capabilities, needs to have an ultra-high capacity and a high density. An uninterruptible power supply (uninterruptible power supply, UPS), as an indispensable core unit of a modern data center, is further miniaturized keep pace with the trend of upgraded capacity and high density.

In a power supply and distribution system of the data center, circuit breakers are usually needed to distribute electric energy. As a key device in the power supply and distribution system, the circuit breaker can control connection/disconnection of a circuit and further has a specific protection function. Specifically, a mechanical switch may be disposed in the circuit breaker, and a working staff may operate the mechanical switch to switch the circuit breaker between a closed state and an open state, thereby connecting or disconnecting the circuit. In addition, after a fault such as overload or a short circuit occurs in the circuit, the circuit breaker can automatically switch to the open state to cut off a current in the circuit, thereby implementing the protection function of the circuit breaker.

For the data center, as a size and power consumption of a power conversion module further decrease, a current level increases accordingly. However, internal space of an existing cabinet is limited. As a result, a layout and a quantity of circuit breakers are limited to a great extent and cannot achieve an operating current with a higher requirement.

### SUMMARY

This application provides a circuit breaker and an electric power device to simplify a structure of an operating mechanism, to help adjust an overall size of the circuit breaker and change space occupied by the circuit breaker in a cabinet, thereby increasing a quantity of circuit breakers that can be arranged in the cabinet and improving safety of the circuit breaker.

According to a first aspect, this application provides an electric power device. The electric power device includes a cabinet and a plurality of circuit breakers and a plurality of power modules located in the cabinet. The plurality of circuit breakers are sequentially disposed in the cabinet in a width direction of the cabinet, a height direction of the circuit breaker is the same as the width direction of the cabinet, a width direction of the circuit breaker is the same as a height direction of the cabinet, and a depth direction of the circuit breaker is the same as a depth direction of the cabinet. Specifically, the circuit breaker includes a housing, an operating handle, an operating mechanism, a current-carrying component, and an arc-quenching chamber. The operating handle is connected to the operating mechanism. The current-carrying component includes a moving contact and a fixed contact. The moving contact is rotatable relative to the housing, and the fixed contact is located on a side that is of the moving contact and that is away from the operating mechanism in the depth direction of the circuit breaker. At least a portion that is of the operating handle and that is close to the operating mechanism, the operating mechanism, the moving contact, and the arc-quenching chamber are sequentially disposed in the housing in the depth direction of the circuit breaker. The operating handle is configured to control the operating mechanism to drive the moving contact to move, so that the moving contact is in contact with or separated from the fixed contact. The arc-quenching chamber is configured to extinguish an electric arc that is generated when the moving contact is separated from the fixed contact. Specifically, during arrangement of the operating mechanism, the operating mechanism includes a first mounting plate, a second mounting plate, a lock assembly, and at least one group of operating assemblies. The first mounting plate and the second mounting plate are disposed opposite to each other in the width direction of the circuit breaker, and the lock assembly and the operating assemblies are located between the first mounting plate and the second mounting plate. The first mounting plate and the second mounting plate are separately fastened to the housing, and the operating handle is in rotary connection to the first mounting plate and the second mounting plate. The lock assembly is configured to lock or unlock movement of the operating assembly. The operating assembly includes a jump buckle, an upper connecting rod, a lower connecting rod, and a spring. The jump buckle is in rotary connection to the first mounting plate through a first fixed shaft. In the height direction of the circuit breaker, the lock assembly is located on one side of the first fixed shaft, and the upper connecting rod and the lower connecting rod are located on the other side of the first fixed shaft. One end of the upper connecting rod is in rotary connection to the jump buckle through a first rotating shaft, and the other end of the upper connecting rod is in rotary connection to one end of the lower connecting rod through a second rotating shaft. One end that is of the lower connecting rod and that is away from the upper connecting rod is connected to the moving contact. One end of the spring is fastened to the operating handle, and the other end of the spring is fastened to the second rotating shaft. The first mounting plate is provided with a first position limiting post, where the first position limiting post is configured to limit rotation of the jump buckle and the upper connecting rod when the lock assembly unlocks the jump buckle. The upper connecting rod is provided with a second position limiting post, where the second position limiting post is configured to limit a rotating angle of the jump buckle when the operating handle is closed or opened.

The circuit breaker has a circuit breaker operating surface for a working staff to perform operations, such as a switching-on operation, a switching-off operation, and viewing an operating status of the circuit breaker. In a plane on which the circuit breaker operating surface is located, a size of the circuit breaker in a direction in which the operating handle is pushed is a height, a size of the circuit breaker in a direction perpendicular to the height direction is a width, and a size of the circuit breaker in a direction perpendicular to the circuit breaker operating surface is a depth. The circuit breaker in this application may be used in a power supply and distribution system, and the circuit breaker may be specifically installed in a cabinet. Similarly, the cabinet has a user operating surface for the working staff to perform operations, such as a control operation, installation and removal, and maintenance. The circuit breaker operating surface of the circuit breaker faces a same direction as the user operating surface. A state in which the cabinet is placed on the ground is used as an example. In a plane on which the user operating surface is located, a size of the cabinet parallel to the ground is a width, a size of the cabinet perpendicular to the ground is a height, and a size of the cabinet perpendicular to the user operating surface is a depth. When a plurality of the circuit breakers are installed in the cabinet, the circuit breakers are placed in parallel in the width direction of the cabinet. The circuit breaker operating surface of the circuit breaker faces the same direction as the user operating surface of the cabinet, the height direction of each circuit breaker is the same as the width direction of the cabinet, the width direction of each circuit breaker is the same as the height direction of the cabinet, and the depth direction of each circuit breaker is the same as the depth direction of the cabinet. In other words, each circuit breaker is horizontally placed in the cabinet.

In the electric power device according to this application, that the portion that is of the operating handle of the circuit breaker and that is close to the operating mechanism, the operating mechanism, the moving contact, and the arc-quenching chamber are disposed in the depth direction of the circuit breaker may be understood as follows: The portion of the operating handle, the operating mechanism, the moving contact, and the arc-quenching chamber are disposed in the depth direction of the circuit breaker in a layered manner. In this way, layouts of spare parts and components of the circuit breaker in the height direction may be reduced, to reduce the height of the circuit breaker and reduce space occupied by the circuit breaker, thereby increasing a quantity of circuit breakers that can be arranged in the cabinet. The circuit breaker includes a 1^{st} layer (an electric operation layer or a manual operation layer), a 2^{nd} layer (an operation layer), a 3^{rd} layer (a current-carrying layer), and a 4^{th} layer (an arc-quenching layer). Specifically, during arrangement of the circuit breaker, the operating handle is located in the 1^{st} layer, the operating mechanism is located in the 2^{nd} layer, the current-carrying component is located in the 3^{rd} layer, and the arc-quenching chamber is located in the 4^{th} layer. In the 2^{nd} layer, the lock assembly and the operating assembly are disposed in the height direction of the circuit breaker to implement functions of locking and unlocking the operating assembly. In addition, the operating mechanism is of a simple structure to facilitate miniaturization of the circuit breaker.

In a possible implementation, the operating handle is pushed in the height direction of the circuit breaker, and when the operating handle is closed, the operating handle is close to the lock assembly. The lock assembly is arranged in a direction in which the operating handle is to be closed, and a tripping control assembly (for example, a thermomagnetic tripping system or an electronic tripping system) may be correspondingly arranged in the direction in which the operating handle is to be closed, to minimize the height of the circuit breaker, so that more circuit breakers may be installed in the width direction of the cabinet when the circuit breaker is horizontally installed in the cabinet.

Specifically, during arrangement of a structure of the jump buckle, the jump buckle includes a first part, a second part, and a third part that are of an integrated structure. The second part is located between the first part and the third part. The first part, the second part, and the third part are disposed in an S shape. The first part is disposed close to the lock assembly. The first fixed shaft is in rotary connection between the first part and the second part. The third part is in rotary connection to the first rotating shaft. The first position limiting post extends between the first part and the second part. When the lock assembly unlocks the jump buckle, the jump buckle rotates around the first fixed shaft and drives the upper connecting rod to move until the first part of the jump buckle and the upper connecting rod separately abut against the first position limiting post, so that the jump buckle and the upper connecting rod stop rotating. The second position limiting post extends between the second part and the third part. When the operating handle is closed, the operating handle drives, through the spring, the second rotating shaft to move, and movement of the second rotating shaft drives the upper connecting rod and the jump buckle sequentially to rotate until the second part of the jump buckle abuts against the second position limiting post, so that the jump buckle stops rotating. When the operating handle is opened, the operating handle drives, through the spring, the third rotation to move, and movement of the second rotating shaft drives the upper connecting rod and the jump buckle sequentially to rotate until the third part of the jump buckle abuts against the second position limiting post, so that the jump buckle stops rotating. Therefore, during switching-on and switching-off, the second position limiting post can avoid excessive rotation of the operating handle by limiting the rotating angle of the jump buckle.

A quantity of the operating assemblies in this application is not limited. For example, the operating mechanism may include one, two, or more operating mechanisms. This is not limited herein. In a possible implementation, the at least one operating assembly includes a first operating assembly and a second operating assembly. The first mounting plate, the first operating assembly, the second operating assembly, and the second mounting plate are sequentially disposed in the width direction of the circuit breaker. The lower connecting rod, the upper connecting rod, and the jump buckle of the first operating assembly are sequentially disposed in a direction away from the first mounting plate. The lower connecting rod, the upper connecting rod, and the jump buckle of the second operating assembly are sequentially disposed in a direction away from the second mounting plate.

In the operating mechanism, the first rotating shaft of the first operating assembly and the first rotating shaft of the second operating assembly are of an integrated structure, so that the upper connecting rod of the first operating assembly and the upper connecting rod of the second operating assembly move synchronously.

In addition, in the operating mechanism, the jump buckle of the first operating assembly and the jump buckle of the second operating assembly are of an integrated structure, to further simplify a structure of the operating mechanism.

The lock assembly in this application may be in a form of three levels of locking. Specifically, the lock assembly includes a first-level lock connecting rod, a second-level lock connecting rod, and a third-level lock rotating shaft. The first-level lock connecting rod, the second-level lock connecting rod, and the third-level lock rotating shaft are separately in rotary connection to the first mounting plate. The first-level lock connecting rod is located on a side that is of the second-level lock connecting rod and the third-level lock rotating shaft and that is close to the jump buckle. The third-level lock rotating shaft is configured to lock or unlock rotation of the second-level lock connecting rod relative to the housing. The second-level lock connecting rod is configured to lock or unlock rotation of the first-level lock connecting rod relative to the housing. The first-level lock connecting rod is configured to lock or unlock rotation of the jump buckle relative to the housing.

Specifically, during arrangement of locking between a third-level lock and a second-level lock, one end that is of the third-level lock rotating shaft and that is close to the second-level lock connecting rod is a semicircular end, one end that is of the second-level lock connecting rod and that is close to the third-level lock rotating shaft is provided with a lap portion, the lap portion is configured to be in lap connection to the circular end, and rotation of the second-level lock connecting rod is locked through the lap connection between the lap portion and the circular end. Specifically, during arrangement of locking between the second-level lock and a first-level lock, one end that is of the second-level lock connecting rod and that is close to the first-level lock connecting rod is configured to abut against the first-level lock connecting rod, to lock rotation of the first-level lock connecting rod.

In a possible implementation, the lock assembly further includes a torsional spring and a second fixed shaft, the second-level lock connecting rod is in rotary connection to the first mounting plate through the second fixed shaft, the torsional spring is in rotary connection to the second fixed shaft, and the torsional spring is fixed relative to the second-level lock connecting rod. When the lap connection between the lap portion and the circular end is unlocked, the torsional spring may provide reset elasticity to drive the second-level lock connecting rod to rotate, so that the second-level lock connecting rod is away from the first-level lock connecting rod, to unlock the rotation of the first-level lock connecting rod.

In a possible implementation, the lock assembly further includes a reset spring and a third fixed shaft, the reset spring is in rotary connection to the first mounting plate through the third fixed shaft, and the reset spring is fixed relative to the first-level lock connecting rod. One end that is of the second-level lock connecting rod and that is close to the jump buckle is configured to abut against the jump buckle. When the second-level lock connecting rod is away from the first-level lock connecting rod, the reset spring may provide reset elasticity to drive the first-level lock connecting rod to rotate, so that the first-level lock connecting rod is away from the jump buckle, to unlock the rotation of the jump buckle.

To avoid excessive rotation of the third-level lock rotating shaft, in a possible implementation, the third-level lock rotating shaft is provided with a position limiting cylinder, the first mounting plate is provided with an arc-shaped guide slot, and the position limiting cylinder is accommodated in the arc-shaped guide slot and slides along the arc-shaped guide slot.

In a possible implementation, the second-level lock connecting rod includes two connecting rods, and the two connecting rods are disposed opposite to each other and fastened. The second-level lock connecting rod is in a double-blade form, and the second-level lock connecting rod is disposed at a central position of the operating mechanism in the width direction of the circuit breaker. The lock assembly may be unlocked by rotating the third-level lock rotating shaft. This structure enables the lock assembly to bear a more balanced stress, with enhanced structural stability.

In a possible implementation, the circuit breaker further includes a tripping control assembly, the tripping control assembly is disposed on a side of the moving contact in the height direction of the circuit breaker, and the tripping control assembly is in transmission connection to the lock assembly. The tripping control assembly is configured to: when a fault current is detected, control the lock assembly to drive the operating assembly to move, so that the moving contact is separated from the fixed contact.

According to a second aspect, this application provides a circuit breaker. The circuit breaker includes a housing, an operating handle, an operating mechanism, a current-carrying component, and an arc-quenching chamber. The operating handle is connected to the operating mechanism. The current-carrying component includes a moving contact and a fixed contact. The moving contact is rotatable relative to the housing, and the fixed contact is located on a side that is of the moving contact and that is away from the operating mechanism in a depth direction of the circuit breaker. At least a portion that is of the operating handle and that is close to the operating mechanism, the operating mechanism, the moving contact, and the arc-quenching chamber are sequentially disposed in the housing in the depth direction of the circuit breaker. The operating handle is configured to control the operating mechanism to drive the moving contact to move, so that the moving contact is in contact with or separated from the fixed contact. The arc-quenching chamber is configured to extinguish an electric arc that is generated when the moving contact is separated from the fixed contact. Specifically, during arrangement of the operating mechanism, the operating mechanism includes a first mounting plate, a second mounting plate, a lock assembly, and at least one group of operating assemblies. The first mounting plate and the second mounting plate are disposed opposite to each other in a width direction of the circuit breaker, and the lock assembly and the operating assemblies are located between the first mounting plate and the second mounting plate. The first mounting plate and the second mounting plate are separately fastened to the housing, and the operating handle is in rotary connection to the first mounting plate and the second mounting plate. The lock assembly is configured to lock or unlock movement of the operating assembly. The operating assembly includes a jump buckle, an upper connecting rod, a lower connecting rod, and a spring. The jump buckle is in rotary connection to the first mounting plate through a first fixed shaft. In a height direction of the circuit breaker, the lock assembly is located on one side of the first fixed shaft, and the upper connecting rod and the lower connecting rod are located on the other side of the first fixed shaft. One end of the upper connecting rod is in rotary connection to the jump buckle through a first rotating shaft, and the other end of the upper connecting rod is in rotary connection to one end of the lower connecting rod through a second rotating shaft. One end that is of the lower connecting rod and that is away from the upper connecting rod is connected to the moving contact. One end of the spring is fastened to the operating handle, and the other end of the spring is fastened to the second rotating shaft. The first mounting plate is provided with a first position limiting post, where the first position limiting post is configured to limit rotation of the jump buckle and the upper connecting rod when the lock assembly unlocks the jump buckle. The upper connecting rod is provided with a second position limiting post, where the second position limiting post is configured to limit a rotating angle of the jump buckle when the operating handle is closed or opened.

The circuit breaker has a circuit breaker operating surface for a working staff to perform operations, such as a switching-on operation, a switching-off operation, and viewing an operating status of the circuit breaker. In a plane on which the circuit breaker operating surface is located, a size of the circuit breaker in a direction in which the operating handle is pushed is a height, a size of the circuit breaker in a direction perpendicular to the height direction is a width, and a size of the circuit breaker in a direction perpendicular to the circuit breaker operating surface is a depth. The circuit breaker in this application may be used in a power supply and distribution system, and the circuit breaker may be specifically installed in a cabinet. Similarly, the cabinet has a user operating surface for the working staff to perform operations, such as a control operation, installation and removal, and maintenance. The circuit breaker operating surface of the circuit breaker faces a same direction as the user operating surface. A state in which the cabinet is placed on the ground is used as an example. In a plane on which the user operating surface is located, a size of the cabinet parallel to the ground is a width, a size of the cabinet perpendicular to the ground is a height, and a size of the cabinet perpendicular to the user operating surface is a depth. When a plurality of the circuit breakers are installed in the cabinet, the circuit breakers are placed in parallel in a width direction of the cabinet. The circuit breaker operating surface of the circuit breaker faces the same direction as the user operating surface of the cabinet, the height direction of each circuit breaker is the same as the width direction of the cabinet, the width direction of each circuit breaker is the same as a height direction of the cabinet, and the depth direction of each circuit breaker is the same as a depth direction of the cabinet. In other words, each circuit breaker is horizontally placed in the cabinet.

In the circuit breaker according to this application, that the portion that is of the operating handle and that is close to the operating mechanism, the operating mechanism, the moving contact, and the arc-quenching chamber are disposed in the depth direction of the circuit breaker may be understood as follows: The portion of the operating handle, the operating mechanism, the moving contact, and the arc-quenching chamber are disposed in the depth direction of the circuit breaker in a layered manner. In this way, layouts of spare parts and components of the circuit breaker in the height direction may be reduced, to reduce the height of the circuit breaker and reduce space occupied by the circuit breaker, thereby increasing a quantity of circuit breakers that can be arranged in the cabinet. The circuit breaker includes a 1^{st} layer (an electric operation layer or a manual operation layer), a 2^{nd} layer (an operation layer), a 3^{rd} layer (a current-carrying layer), and a 4^{th} layer (an arc-quenching layer). Specifically, during arrangement of the circuit breaker, the operating handle is located in the 1^{st} layer, the operating mechanism is located in the 2^{nd} layer, the current-carrying component is located in the 3^{rd} layer, and the arc-quenching chamber is located in the 4^{th} layer. In the 2^{nd} layer, the lock assembly and the operating assembly are disposed in the height direction of the circuit breaker to implement functions of locking and unlocking the operating assembly. In addition, the operating mechanism is of a simple structure to facilitate miniaturization of the circuit breaker.

### BRIEF DESCRIPTION OF DRAWINGS

FIG. 1 is a diagram of an application scenario of a circuit breaker according to an embodiment of this application;
FIG. 2 is a diagram of an electric power device according to an embodiment of this application;
FIG. 3 is a diagram of a circuit breaker according to an embodiment of this application;
FIG. 4 is another diagram of a circuit breaker according to an embodiment of this application;
FIG. 5 is a diagram of an operating mechanism according to an embodiment of this application;
FIG. 6 is another diagram of an operating mechanism according to an embodiment of this application;
FIG. 7 is still another diagram of an operating mechanism according to an embodiment of this application;
FIG. 8 is a diagram of an operating mechanism in an open state according to an embodiment of this application;
FIG. 9 is a diagram of an operating mechanism in a closed state according to an embodiment of this application;
FIG. 10 is a diagram of a lock assembly according to an embodiment of this application;
FIG. 11 is yet another diagram of an operating mechanism according to an embodiment of this application;
FIG. 12 is still yet another diagram of an operating mechanism according to an embodiment of this application;
FIG. 13 is still another diagram of a circuit breaker according to an embodiment of this application;
FIG. 14 is another diagram of an operating mechanism in a closed state according to an embodiment of this application;
FIG. 15 is another diagram of an operating mechanism in an open state according to an embodiment of this application;
FIG. 16 is a diagram of an operating mechanism in a free tripping state according to an embodiment of this application; and
FIG. 17 is another diagram of an operating mechanism in a free tripping state according to an embodiment of this application.

### Reference numerals:

01: power supply and distribution system;
02: power module;
10: electric power device;
11: cabinet;
20: circuit breaker;
21: housing;
22: operating handle;
23: operating mechanism;
24: current-carrying component;
25: arc-quenching chamber;
26: tripping control assembly;
27: arc extinction module;
110: user operating surface;
210: circuit breaker operating surface;
231: first mounting plate;
232: second mounting plate;
233: lock assembly;
234: operating assembly;
235: first position limiting post;
236: second position limiting post;
237: first part;
238: second part;
239: third part;
241: moving contact;
242: fixed contact;
261: standby protector;
262: mutual inductor;
2331: torsional spring;
2332: reset spring;
2333: position limiting cylinder;
2334: arc-shaped guide slot;
2335: connecting rod;
234a: first operating assembly;
234b: second operating assembly.

### DESCRIPTION OF EMBODIMENTS

To make the objectives, technical solutions, and advantages of this application clearer, the following further describes this application in detail with reference to the accompanying drawings.

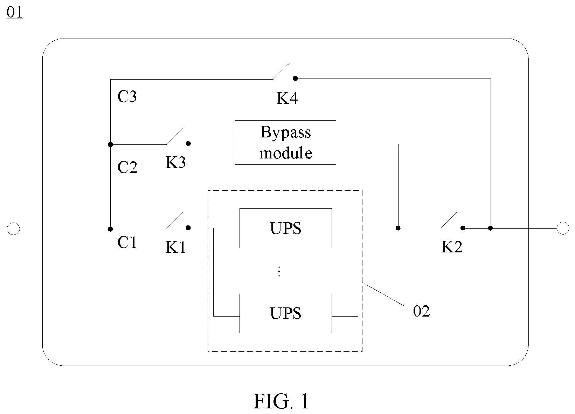

For ease of understanding a circuit breaker and an electric power device provided in embodiments of this application, the following describes an application scenario of the circuit breaker and the electric power device. The circuit breaker and the electric power device provided in embodiments of this application may be widely applied to various power supply and distribution systems. FIG. 1 is a diagram of an application scenario of a circuit breaker according to an embodiment of this application. As shown in FIG. 1, in an example provided in this application, the circuit breaker may be used in a power supply and distribution system 01 at a data center, and is configured to connect, carry, and disconnect a current between a power grid and the data center. The power supply and distribution system 01 may include a power module 02 (the power module 02 shown in FIG. 1, which is formed by connecting a plurality of UPSs in parallel and in series) and a plurality of circuit breakers. For example, three circuits are disposed in the power supply and distribution system 01, and the three circuits are a first circuit C1, a second circuit C2, and a third circuit C3. A circuit breaker is correspondingly disposed in each circuit. The first circuit C1 is connected to the power module 02, where a first circuit breaker K1 is disposed at an input end of the power module 02, and a second circuit breaker K2 is disposed at an output end of the power module 02. The second circuit C2 is connected to a bypass module, where a third circuit breaker K3 is disposed at one end of the bypass module, and the other end of the bypass module is connected to the second circuit breaker K2. The third circuit C3 is a standby circuit, where a fourth circuit breaker K4 is disposed.

When a circuit between the power grid (or a power supply) and the data center needs to be connected, the first circuit breaker K1 and the second circuit breaker K2 may be switched to a closed state. When the circuit between the power grid and the data center needs to be disconnected, the first circuit breaker K1 or the second circuit breaker K2 may be switched to an open state. In this way, power-on and power-off states of the data center are controlled by controlling the closed state and the open state of the circuit breaker. When an electric device of the data center needs to be overhauled or maintained, the first circuit breaker K1 and the second circuit breaker K2 may be switched to the open state, and the third circuit breaker K3 or the fourth circuit breaker K4 may be switched to the closed state, to facilitate operations such as overhauling or maintenance of the electric device.

In addition, the circuit breaker in this application may also be used in a power supply and distribution system 01 for an enterprise electric device or a public electric device, and is configured to connect, carry, and disconnect a current between a power grid and the enterprise electric device or the public electric device. For example, when an electric device (such as a 4G base station or a 5G base station) needs to operate properly, a working staff may switch the circuit breaker to the closed state, so that the power grid can supply electric energy needed for the electric device to operate properly. When the electric device needs to be overhauled or maintained, the working staff may switch the circuit breaker to the open state, to facilitate operations such as overhaul or maintenance of the electric device.

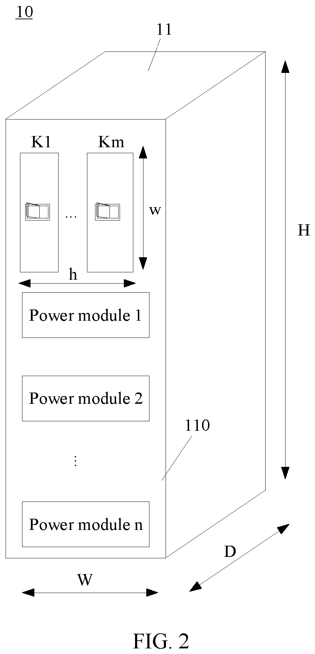

The power supply system may specifically include a plurality of electric power devices 10. FIG. 2 is a diagram of an electric power device according to an embodiment of this application. As shown in FIG. 2, each electric power device 10 includes a cabinet 11 and a plurality of power modules and a plurality of circuit breakers (K1, ..., Km) located in the cabinet 11. One side that is of the cabinet 11 and faces a working staff is a user operating surface 110. In this application, a state in which the cabinet 11 is placed on the ground is used as an example, and the user operating surface 110 is perpendicular to the ground. A size of the user operating surface 110 parallel to the ground is a width, a size perpendicular to the ground is a height, and a size perpendicular to the user operating surface 110 is a depth. The plurality of power modules are sequentially stacked in a height direction H of the cabinet 11, and the plurality of circuit breakers are sequentially placed on one side of the plurality of power modules in a width direction W of the cabinet 11. The power module is configured to perform power conversion on a voltage from a power grid, to output an adapted voltage to a load device. Specifically, the power module may be an AC/AC module, or may be an AC/DC module.

In the existing electric power device, because the width and the height of the cabinet are limited, a quantity of circuit breakers on a side of the user operating surface 110 is limited and cannot satisfy a large-capacity and high-density layout requirement for the power supply and distribution system 01. Therefore, this application provides a circuit breaker and an electric power device to simplify a structure of an operating mechanism, to help adjust an overall size of the circuit breaker and change space occupied by the circuit breaker in a cabinet, thereby increasing a quantity of circuit breakers that can be arranged in the cabinet and improving safety of the circuit breaker.

It should be noted that terms used in the following embodiments are merely intended to describe specific embodiments, but are not intended to limit this application. The terms "one", "a", "the", "the foregoing", "that", and "this" in singular forms used in the specification and the appended claims of this application are also intended to include expressions such as "one or more", unless otherwise specified in the context clearly.

Reference to "one embodiment", "some embodiments" or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

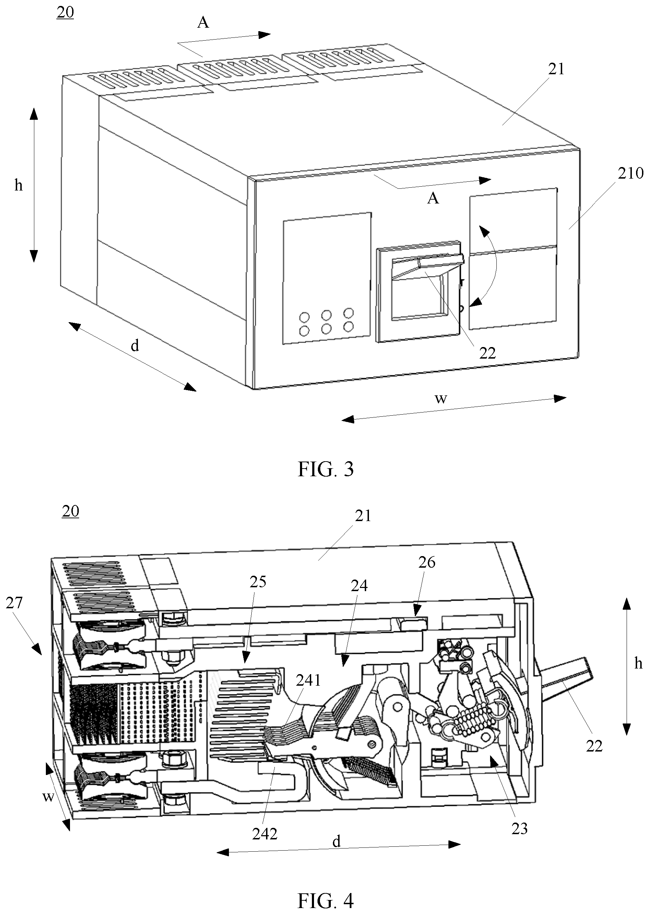

FIG. 3 is a diagram of a circuit breaker according to an embodiment of this application. FIG. 4 is another diagram of a circuit breaker according to an embodiment of this application. FIG. 4 shows a sectional view of the circuit breaker in FIG. 3 in an A-A direction. As shown in FIG. 3 and FIG. 4, the circuit breaker 20 includes a housing 21, an operating handle 22, an operating mechanism 23, a current-carrying component 24, and an arc-quenching chamber 25. Specifically, the operating handle 22 is connected to the operating mechanism 23. The current-carrying component 24 includes a moving contact 241 and a fixed contact 242. In an embodiment, one end that is of the operating handle 22 and that is away from the operating mechanism 23 may extend out of the housing 21, so that a working staff can push the operating handle 22 to perform a switching-on operation or a switching-off operation. In another embodiment, the housing 21 is provided with a knob, to implement switching-off and switching-on of the circuit breaker 20 through a manual operation on the knob. Specifically, one end that is of the operating handle 22 and that is away from the operating mechanism 23 is connected to the knob. When the working staff performs the manual operation on the knob, the knob rotates and drives the operating handle 22 to be pushed in a height direction h. In another embodiment, the circuit breaker 20 may further include a remote controller and an electric operating apparatus. The electric operating apparatus is connected to the operating handle 22 and implements, together with the remote controller, switching-off and switching-on of the circuit breaker 20 through an electric operation. When performing the electric operation, the working staff sends a switching-on instruction or a switching-off instruction to the remote controller. The remote controller may control the electric operating apparatus to push the operating handle 22. In this embodiment, the working staff may send an instruction nearby the circuit breaker 20, or may send an instruction remotely through a communication apparatus. In addition, at least a portion that is of the operating handle 22 and that is close to the operating mechanism 23, the operating mechanism 23, the moving contact 241, and the arc-quenching chamber 25 are sequentially disposed in the housing 21 in a depth direction d of the circuit breaker 20. In the depth direction d of the circuit breaker 20, the fixed contact 242 is located on a side that is of the moving contact 241 and that is away from the operating mechanism 23. To be specific, in the depth direction d of the circuit breaker 20, the operating mechanism 23 is located on one side of the operating handle 22, and the operating mechanism 23 is in transmission connection to the operating handle 22. The current-carrying component 24 is located on a side that is of the operating mechanism 23 and that is away from the operating handle 22. The operating mechanism 23 is connected to the moving contact 241, and the operating handle 22 is configured to control the operating mechanism 23 to drive the moving contact 241 to move, so that the moving contact 241 is in contact with or separated from the fixed contact 242. The arc-quenching chamber 25 is configured to extinguish an electric arc that is generated when the moving contact 241 is separated from the fixed contact 242.

In this application, a side on which the operating handle 22 extends out of the housing 21 is a circuit breaker operating surface 210 for the working staff to perform operations, such as a switching-on operation, a switching-off operation, and viewing an operating status of the circuit breaker 20. In a plane on which the circuit breaker operating surface 210 is located, a size of the circuit breaker 20 in a direction in which the operating handle 22 is pushed is a height, a size of the circuit breaker 20 in a direction perpendicular to the height direction h is a width, and a size of the circuit breaker 20 in a direction perpendicular to the circuit breaker operating surface 210 is a depth. The circuit breaker 20 in this application may be used in the power supply and distribution system 01, and the circuit breaker 20 may be specifically installed in the cabinet 11. When a plurality of the circuit breakers 20 are installed in the cabinet 11, the circuit breakers 20 are placed in parallel in the width direction W of the cabinet 11. The circuit breaker operating surface 210 of the circuit breaker 20 faces a same direction as the user operating surface of the cabinet 11, the height direction h of each circuit breaker 20 is the same as the width direction W of the cabinet 11, a width direction w of each circuit breaker 20 is the same as the height direction H of the cabinet 11, and the depth direction d of each circuit breaker 20 is the same as the depth direction D of the cabinet 1. In other words, each circuit breaker 20 is horizontally placed in the cabinet 11. Therefore, when the working staff performs the switching-on operation or the switching-off operation on the circuit breaker 20, the working staff pushes the operating handle 22 in the width direction W of the cabinet 11. When the operating handle 22 is pushed to perform the switching-off operation or the switching-on operation, the operating mechanism 23 can move along with the operating handle 22, to drive the moving contact 241 to be separated from or in contact with the fixed contact 242. When the moving contact 241 is in contact with the fixed contact 242, the circuit breaker 20 is in the closed state; or when the moving contact 241 is separated from the fixed contact 242, the circuit breaker 20 is in the open state. In the circuit breaker 20 according to this application, that at least the portion that is of the operating handle 22 and that is close to the operating mechanism 23, the operating mechanism 23, the moving contact 241, and the arc-quenching chamber 25 are disposed in the depth direction d of the circuit breaker 20 may be considered as being disposed in a layered manner, to reduce the height h of the circuit breaker 20 and reduce space occupied by the circuit breaker 20, thereby increasing a quantity of circuit breakers 20 that can be arranged in the cabinet 11. Specifically, the operating handle 22 is located in a 1^{st} layer (an electric operation layer or a manual operation layer), the operating mechanism 23 is located in a 2^{nd} layer (an operation layer), a portion of the current-carrying component 24 is located in a 3^{rd} layer (a current-carrying layer), and the arc-quenching chamber 25 is located in a 4^{th} layer (an arc-quenching layer).

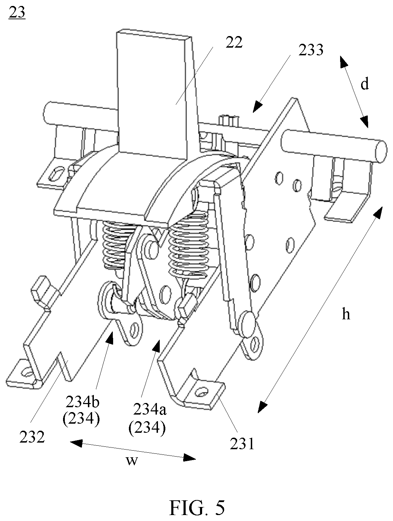

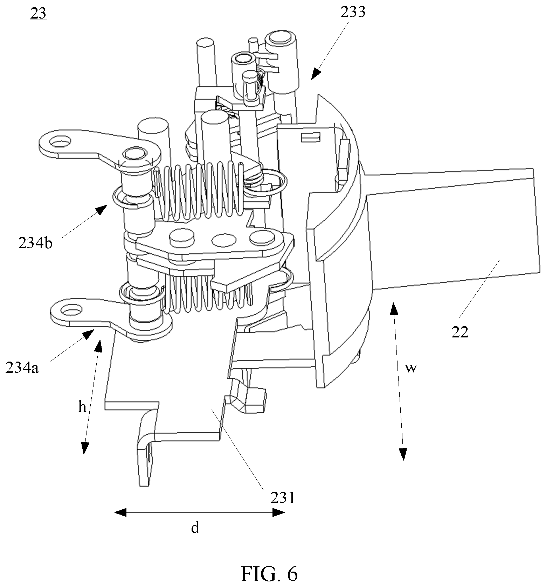

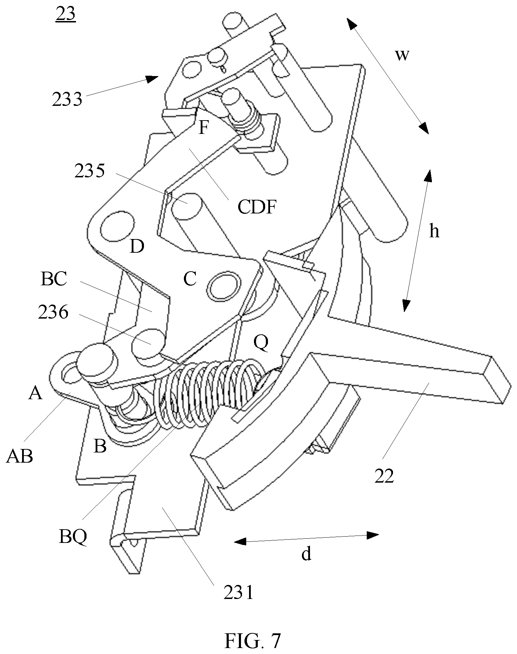

FIG. 5 is a diagram of an operating mechanism according to an embodiment of this application. FIG. 6 is another diagram of an operating mechanism according to an embodiment of this application, where a second mounting plate is omitted from the operating mechanism in FIG. 6. As shown in FIG. 5 and FIG. 6, specifically, during arrangement of the operating mechanism 23, the operating mechanism 23 includes a first mounting plate 231, a second mounting plate 232, a lock assembly 233, and at least one group of operating assemblies 234. The first mounting plate 231 and the second mounting plate 232 are disposed opposite to each other in the width direction w of the circuit breaker 20, and the lock assembly 233 and the operating assemblies 234 are located between the first mounting plate 231 and the second mounting plate 232. The first mounting plate 231 and the second mounting plate 232 are separately fastened to the housing 21, and the operating handle 22 is in rotary connection to the first mounting plate 231 and the second mounting plate 232. The lock assembly 233 is configured to lock or unlock movement of the operating assembly 234. FIG. 7 is still another diagram of an operating mechanism according to an embodiment of this application. As shown in FIG. 7, the operating assembly 234 includes a jump buckle CDF, an upper connecting rod BC, a lower connecting rod AB, and a spring BQ. The jump buckle CDF is in rotary connection to the first mounting plate 231 through a first fixed shaft D. In the height direction h of the circuit breaker 20, the lock assembly 233 is located on one side of the first fixed shaft D, and the upper connecting rod BC and the lower connecting rod AB are located on the other side of the first fixed shaft D. One end of the upper connecting rod BC is in rotary connection to the jump buckle CDF through a first rotating shaft C, and the other end of the upper connecting rod BC is in rotary connection to one end of the lower connecting rod AB through a second rotating shaft B. One end that is of the lower connecting rod AB and that is away from the upper connecting rod BC is connected to the moving contact 241. One end of the spring BQ is fastened to the operating handle 22, and the other end of the spring BQ is fastened to the second rotating shaft B. The first mounting plate 231 is provided with a first position limiting post 235, where the first position limiting post 235 is configured to limit rotation of the jump buckle CDF and the upper connecting rod BC when the lock assembly 233 unlocks the jump buckle CDF. The upper connecting rod BC is provided with a second position limiting post 236, where the second position limiting post 236 is configured to limit a rotating angle of the jump buckle CDF when the operating handle 22 is closed or opened. Therefore, in this embodiment, the lock assembly 233 and the operating assembly 234 are disposed in the height direction h of the circuit breaker 20 to implement functions of locking and unlocking the operating assembly 234. In addition, the operating mechanism 23 is of a simple structure to facilitate miniaturization of the circuit breaker 20.

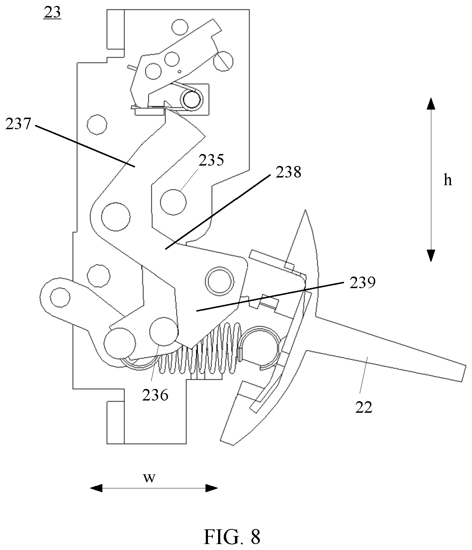

FIG. 8 is a diagram of an operating mechanism in an open state according to an embodiment of this application. As shown in FIG. 8, specifically, during arrangement of a structure of the jump buckle CDF, the jump buckle CDF includes a first part 237, a second part 238, and a third part 239 that are of an integrated structure. The second part 238 is located between the first part 237 and the third part 239. The first part 237, the second part 238, and the third part 239 are disposed in an S shape. The first part 237 is disposed close to the lock assembly 233. The first fixed shaft D is in rotary connection between the first part 237 and the second part 238. The third part 239 is in rotary connection to the first rotating shaft C. The first position limiting post 235 extends between the first part 237 and the second part 238. When the lock assembly 233 unlocks the jump buckle CDF, the jump buckle CDF rotates around the first fixed shaft D and drives the upper connecting rod BC to move until the first part 237 of the jump buckle CDF and the upper connecting rod BC separately abut against the first position limiting post 235, so that the jump buckle CDF and the upper connecting rod BC stop rotating. The second position limiting post 236 extends between the second part 238 and the third part 239. When the operating handle 22 is closed, the operating handle 22 drives, through the spring, the second rotating shaft B to move, and movement of the second rotating shaft B drives the upper connecting rod BC and the jump buckle CDF sequentially to rotate until the second part 238 of the jump buckle CDF abuts against the second position limiting post 236, so that the jump buckle CDF stops rotating. When the operating handle 22 is opened, the operating handle 22 drives, through the spring, the third rotation to move, and movement of the second rotating shaft B drives the upper connecting rod BC and the jump buckle CDF sequentially to rotate until the third part 239 of the jump buckle CDF abuts against the second position limiting post 236, so that the jump buckle CDF stops rotating. Therefore, during switching-on and switching-off, the second position limiting post 236 can avoid excessive rotation of the operating handle 22 by limiting the rotating angle of the jump buckle CDF.

A quantity of the operating assemblies 234 in this application is not limited. For example, the operating mechanism 23 may include one, two, or more operating mechanisms 23. This is not limited herein. As shown in FIG. 6, in an embodiment, the at least one operating assembly 234 includes a first operating assembly 234a and a second operating assembly 234b. The first mounting plate 231, the first operating assembly 234a, the second operating assembly 234b, and the second mounting plate 232 are sequentially disposed in the width direction w of the circuit breaker 20. The lower connecting rod AB, the upper connecting rod BC, and the jump buckle CDF of the first operating assembly 234a are sequentially disposed in a direction away from the first mounting plate 231. The lower connecting rod AB, the upper connecting rod BC, and the jump buckle CDF of the second operating assembly 234b are sequentially disposed in a direction away from the second mounting plate 232.

In the operating mechanism 23, the first rotating shaft C of the first operating assembly 234a and the first rotating shaft C of the second operating assembly 234b are of an integrated structure, so that the upper connecting rod BC of the first operating assembly 234a and the upper connecting rod BC of the second operating assembly 234b move synchronously. In addition, in the operating mechanism 23, the jump buckle CDF of the first operating assembly 234a and the jump buckle CDF of the second operating assembly 234b are of an integrated structure, to further simplify a structure of the operating mechanism 23.

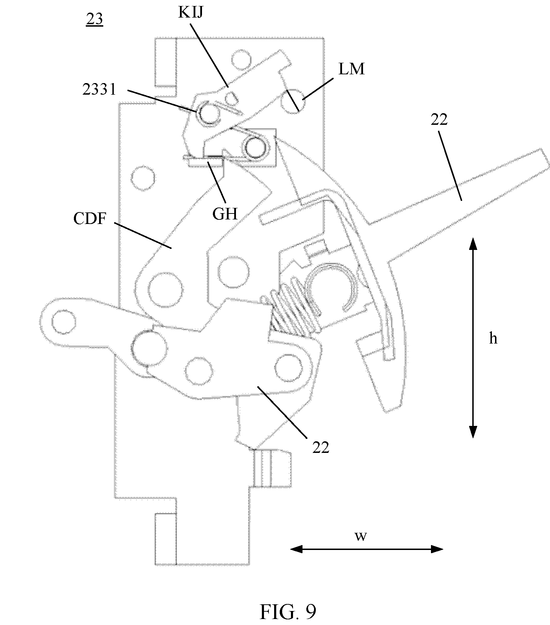

FIG. 9 is a diagram of an operating mechanism in a closed state according to an embodiment of this application. As shown in FIG. 9, the lock assembly 233 in this application may be in a form of three levels of locking. Specifically, the lock assembly 233 includes a first-level lock connecting rod GH, a second-level lock connecting rod KIJ, and a third-level lock rotating shaft LM. The first-level lock connecting rod GH, the second-level lock connecting rod KIJ, and the third-level lock rotating shaft LM are separately in rotary connection to the first mounting plate 231. The first-level lock connecting rod GH is located on a side that is of the second-level lock connecting rod KIJ and the third-level lock rotating shaft LM and that is close to the jump buckle CDF. The third-level lock rotating shaft LM is configured to lock or unlock rotation of the second-level lock connecting rod KIJ relative to the housing 21. The second-level lock connecting rod KIJ is configured to lock or unlock rotation of the first-level lock connecting rod GH relative to the housing 21. The first-level lock connecting rod GH is configured to lock or unlock rotation of the jump buckle CDF relative to the housing 21.

Specifically, during arrangement of locking between a third-level lock and a second-level lock, one end that is of the third-level lock rotating shaft LM and that is close to the second-level lock connecting rod KIJ is a semicircular end, one end that is of the second-level lock connecting rod KIJ and that is close to the third-level lock rotating shaft LM is provided with a lap portion, the lap portion is configured to be in lap connection to the circular end, and rotation of the second-level lock connecting rod KIJ is locked through the lap connection between the lap portion and the circular end. Specifically, during arrangement of locking between the second-level lock and a first-level lock, one end that is of the second-level lock connecting rod KIJ and that is close to the first-level lock connecting rod GH is configured to abut against the first-level lock connecting rod GH, to lock rotation of the first-level lock connecting rod GH.

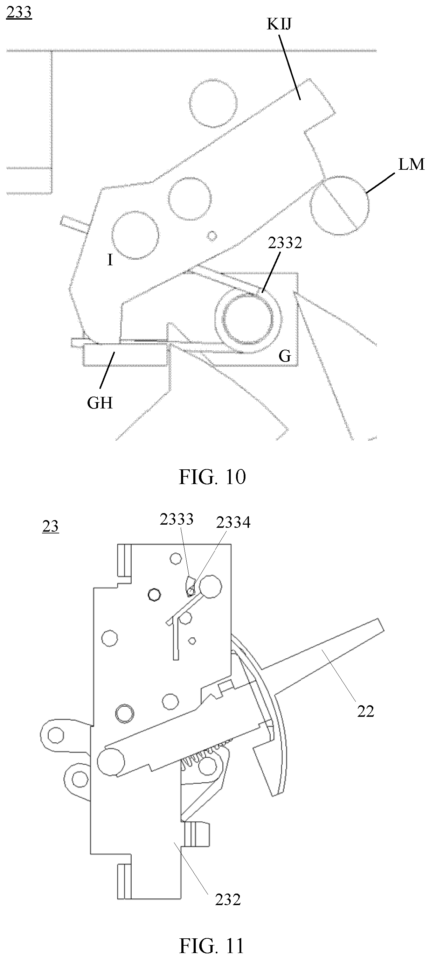

FIG. 10 is a diagram of a lock assembly according to an embodiment of this application. As shown in FIG. 10, in an embodiment, the lock assembly 233 further includes a torsional spring 2331 and a second fixed shaft I. The second-level lock connecting rod KIJ is in rotary connection to the first mounting plate 231 through the second fixed shaft I, the torsional spring 2331 is in rotary connection to the second fixed shaft I, and the torsional spring 2331 is fixed relative to the second-level lock connecting rod KIJ. When the lap connection between the lap portion and the circular end is unlocked, the torsional spring 2331 may provide reset elasticity to drive the second-level lock connecting rod KIJ to rotate, so that the second-level lock connecting rod KIJ is away from the first-level lock connecting rod GH, to unlock the rotation of the first-level lock connecting rod GH.

In an embodiment, the lock assembly 233 further includes a reset spring 2332 and a third fixed shaft G, the reset spring 2332 is in rotary connection to the first mounting plate 231 through the third fixed shaft G, and the reset spring 2332 is fixed relative to the first-level lock connecting rod GH. One end that is of the second-level lock connecting rod KIJ and that is close to the jump buckle CDF is configured to abut against the jump buckle CDF. When the second-level lock connecting rod KIJ is away from the first-level lock connecting rod GH, the reset spring 2332 may provide reset elasticity to drive the first-level lock connecting rod GH to rotate, so that the first-level lock connecting rod GH is away from the jump buckle CDF, to unlock the rotation of the jump buckle CDF.

FIG. 11 is yet another diagram of an operating mechanism according to an embodiment of this application. As shown in FIG. 11, to avoid excessive rotation of the third-level lock rotating shaft LM, in an embodiment, the third-level lock rotating shaft LM is provided with a position limiting cylinder 2333, the first mounting plate 231 is provided with an arc-shaped guide slot 2334, and the position limiting cylinder 2333 is accommodated in the arc-shaped guide slot 2334 and slides along the arc-shaped guide slot 2334.

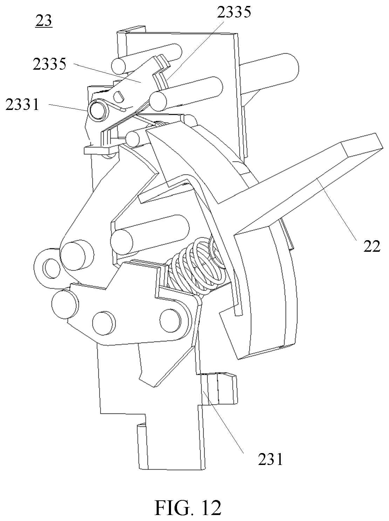

FIG. 12 is still yet another diagram of an operating mechanism according to an embodiment of this application. As shown in FIG. 12, in an embodiment, the second-level lock connecting rod KIJ includes two connecting rods 2335, and the two connecting rods 2335 are disposed opposite to each other and fastened. The second-level lock connecting rod KIJ is in a double-blade form, and the second-level lock connecting rod KIJ is disposed at a central position of the operating mechanism 23 in the width direction w of the circuit breaker 20. The lock assembly 233 may be unlocked by rotating the third-level lock rotating shaft LM. This structure enables the lock assembly 233 to bear a more balanced stress, with enhanced structural stability.

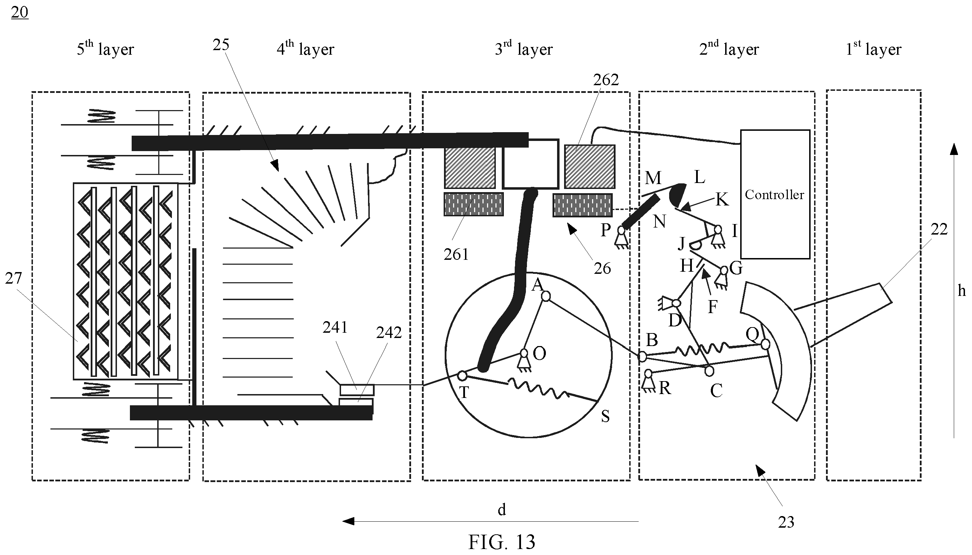

FIG. 13 is still another diagram of a circuit breaker according to an embodiment of this application. As shown in FIG. 13, in an embodiment, the circuit breaker 20 further includes a tripping control assembly 26. The tripping control assembly 26 is disposed on a side of the moving contact in the height direction h of the circuit breaker 20, and the tripping control assembly 26 is in transmission connection to the lock assembly 233. The tripping control assembly 26 is configured to: when a fault current is detected, control the lock assembly 233 to drive the operating assembly 234 to move, so that the moving contact is separated from the fixed contact. A specific type of the tripping control assembly 26 is not limited. In an embodiment, the tripping control assembly 26 may include a standby protector 261 and a magnetic attraction rod PN. The magnetic attraction rod PN may rotate around a point P relative to the housing 21. The standby protector 261 is in magnetic attraction connection to the magnetic attraction rod PN, so that the magnetic attraction rod PN rotates around the point P relative to the housing 21. The magnetic attraction rod PN is in transmission connection to the operating mechanism 23. The standby protector 261 is configured to: when a fault current is detected, magnetically attract the magnetic attraction rod PN, cause the magnetic attraction rod PN to rotate counterclockwise, and drive, through the magnetic attraction rod PN, the operating mechanism 23 to move. The lock assembly 233 is configured to drive, under the control of the tripping control assembly 26, the spring BQ to move. The spring BQ is configured to be driven by the operating handle 22 to drive the lower connecting rod AB to move, so that the moving contact 241 moves, thereby enabling the moving contact to be in contact with or separated from the fixed contact 242. The spring BQ is further configured to be driven by the tripping control assembly 26 to drive the lower connecting rod AB to move, so that the moving contact 241 moves, thereby enabling the moving contact 241 to be in contact with or separated from the fixed contact 242.

In another embodiment, the tripping control assembly 26 includes a thermomagnetic tripping body, a thermally deformable metal piece, and a magnetic clapping device. The thermally deformable metal piece is connected to the thermomagnetic tripping body. The thermally deformable metal piece and the magnetic clapping device are separately in rotary connection to the housing 21. The thermally deformable metal piece and the magnetic clapping device are separately in transmission connection to the operating mechanism 23. The thermomagnetic tripping body is located on one side of the operating mechanism 23 in the width direction w of the circuit breaker 20. The thermomagnetic tripping body is configured to: when a first fault current is detected, the thermally deformable metal piece is deformed due to heat accumulation, so that the thermally deformable metal piece pushes the third-level lock rotating shaft LM of the operating mechanism 23 to rotate; and when a second fault current is detected, the thermomagnetic tripping body quickly attracts the magnetic clapping device, so that the magnetic clapping device pushes the third-level lock rotating shaft LM of the operating mechanism 23 to rotate.

As shown in FIG. 13, in an embodiment, the circuit breaker 20 further includes a controller, where the controller is disposed on one side of the operating mechanism 23 in the direction of the width d of the circuit breaker 20. The tripping control assembly 26 specifically includes a mutual inductor 262, where the mutual inductor 262 is electrically connected to the controller. The mutual inductor 262 is disposed on a side of the moving contact 241 in the height direction h of the circuit breaker 20, and may be specifically disposed on a side that is of the standby protector 261 and that is away from the moving contact 241. The mutual inductor 262 is configured to: when a fault current is detected, send a fault current signal to the controller through a wire of the mutual inductor 262. In another embodiment, the tripping control assembly 26 may further include a magnetic flux component, where the magnetic the flux component is electrically connected to the controller. The magnetic flux component has an ejector pin, where a rotating and fixing rod LW is disposed on a side that is of the ejector pin and that is close to the third-level lock rotating shaft LM of the operating mechanism 23. The ejector pin may extend out of a housing of the magnetic flux component, and push the rotating and fixing rod LW to rotate, so that the rotating and fixing rod LW pushes the third-level lock rotating shaft LM to rotate. The controller is configured to: based on the fault current signal, control the magnetic flux component to drive the ejector pin to extend out of the housing of the magnetic flux component, to push the third-level lock rotating shaft LM to rotate clockwise, thereby driving the operating mechanism 23 to move.

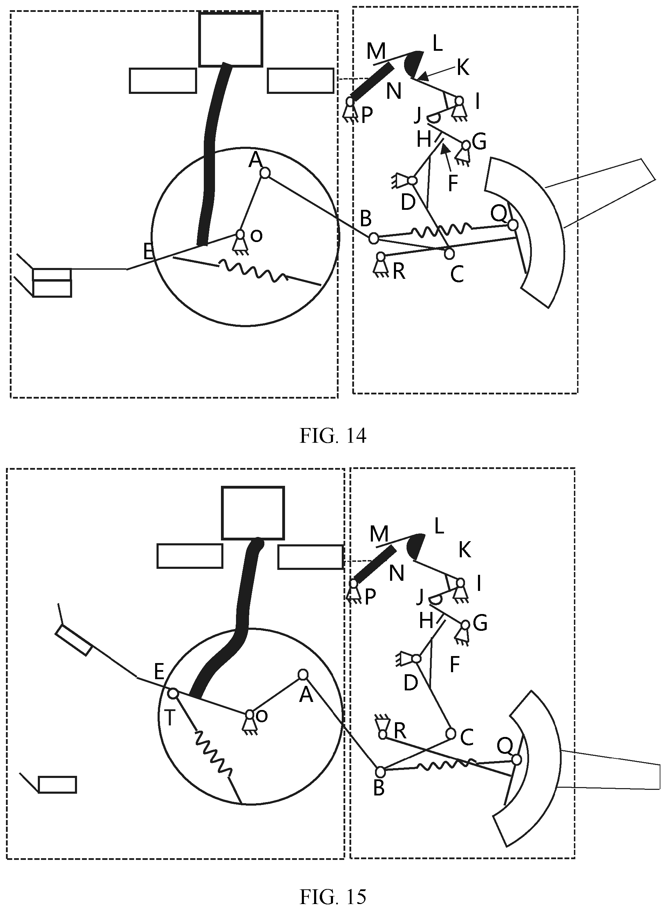

During actual application, the working staff may perform a manual operation to push the operating handle 22 in the height direction h. FIG. 14 is another diagram of an operating mechanism in a closed state according to an embodiment of this application. As shown in FIG. 9 and FIG. 14, specifically, when the circuit breaker 20 is in the closed state, the operating handle 22 is pushed in the height direction h for a switching-off operation. FIG. 15 is another diagram of an operating mechanism in an open state according to an embodiment of this application. As shown in FIG. 8 and FIG. 15, when the operating handle 22 is pushed downward, the operating handle 22 rotates clockwise around a point R. In a rotating process, the operating handle 22 pulls the spring BQ to rotate clockwise, so that a point B moves downward in the height direction h. After the point B moves from one side of a point C to the other side in the height direction h, the spring BQ applies a pulling force to the lower connecting rod AB and the upper connecting rod BC. In this case, the point B moves rightward under the pulling force of the spring BQ, to pull the lower connecting rod AB to move rightward, so that a first fixing rod OA drives the moving contact to rotate clockwise around a point O and then be separated from the fixed contact 242, thereby implementing switching-off. In addition, the jump buckle CDF is subject to torque of counterclockwise rotation under a pulling force of the spring BQ. However, because lap connection between the third-level lock rotating shaft LM and the second-level lock connecting rod KIJ is in a locked state, lap connection between the second-level lock connecting rod KIJ and the first-level lock connecting rod GH and lap connection between the first-level lock connecting rod GH and the jump buckle CDF cannot be unlocked. Therefore, the jump buckle CDF remains in a stationary state, that is, the operating assembly 234 is in a locked state.

Refer to FIG. 14 and FIG. 15 again. When the circuit breaker 20 is in the open state, the operating handle 22 is pushed in the height direction h for a switching-on operation. When the operating handle 22 is pushed upward, the operating handle 22 rotates counterclockwise around the point R. In a rotating process, the operating handle 22 pulls the spring BQ to rotate counterclockwise, so that the point B moves upward in the height direction h. After the point B moves from one side of the point C to the other side in the height direction h, the spring BQ applies a pulling force to the lower connecting rod AB and the upper connecting rod BC. In this case, the point B moves leftward under the pulling force of the spring BQ, to pull the lower connecting rod AB to move leftward, so that the moving contact rotates counterclockwise around the point O and then is in contact with the fixed contact 242, thereby implementing switching-on. In addition, the operating assembly 234 is still in the locked state, so that the jump buckle CDF, the first-level lock connecting rod GH, the second-level lock connecting rod KIJ, and the third-level lock rotating shaft LM are in the stationary state.

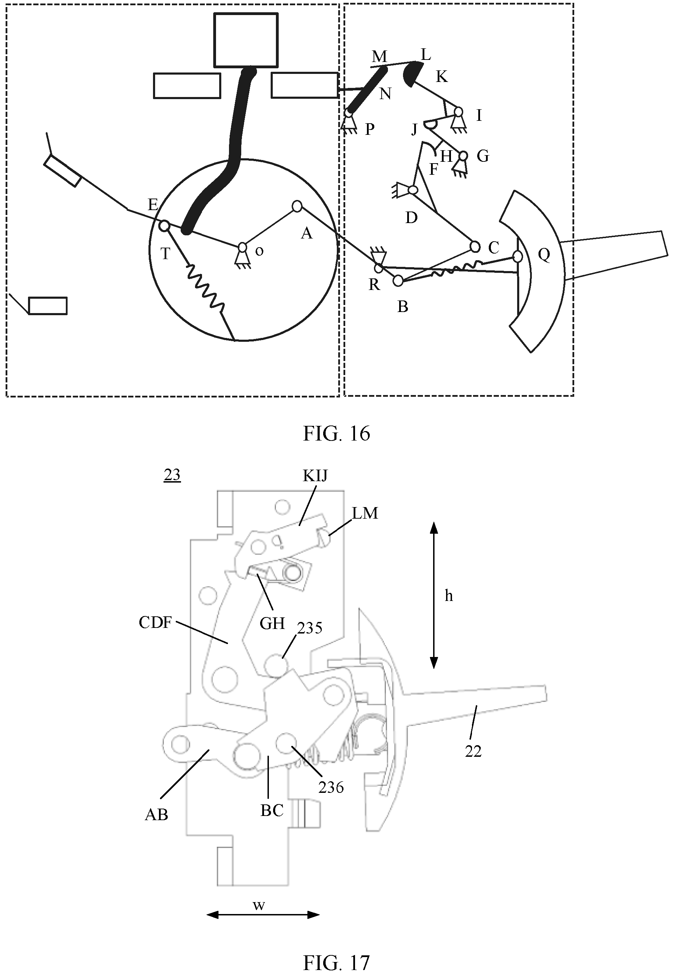

In addition, the working staff may perform a switching-off operation on the circuit breaker 20 by using a plurality of auxiliary parts. FIG. 16 is a diagram of an operating mechanism in a free tripping state according to an embodiment of this application. FIG. 17 is another diagram of an operating mechanism in a free tripping state according to an embodiment of this application. As shown in FIG. 14, FIG. 16, and FIG. 17, specifically, when the circuit breaker 20 is in the closed state, if the tripping control assembly 26 detects a fault current, the tripping control assembly 26 drives the third-level lock rotating shaft LM to rotate clockwise. The third-level lock rotating shaft LM is unlocked from the second-level lock connecting rod KIJ in a rotating process. According to the foregoing description, in the closed state, the jump buckle CDF is subject to the torque of counterclockwise rotation under the pulling force of the spring BQ, and tends to rotate counterclockwise. After the third-level lock rotating shaft LM is unlocked from the second-level lock connecting rod KIJ, the lap connection between the second-level lock connecting rod KIJ and the first-level lock connecting rod GH and the lap connection between the first-level lock connecting rod GH and the jump buckle CDF are also unlocked at the same time, so that the jump buckle CDF is released and rotates counterclockwise around the first fixed shaft D. In a process of rotating counterclockwise, the jump buckle CDF pushes the first-level lock connecting rod GH to rotate clockwise around the second rotating shaft G, so that the first-level lock connecting rod GH pushes the second-level lock connecting rod KIJ to rotate clockwise around a point I at the same time, thereby fully unlocking the lock assembly 233. After the lock assembly 233 is fully unlocked, in the process of rotating counterclockwise, the jump buckle CDF drives a second fixing rod CD to rotate counterclockwise, to drive the spring BQ to rotate counterclockwise, so that the point B moves downward in the height direction h. In addition, after the point B moves from one side of the point C to the other side in the height direction h, the spring BQ applies a pulling force to the lower connecting rod AB and the upper connecting rod BC. In this case, the point B moves rightward under the pulling force of the spring BQ, to pull the lower connecting rod AB to move rightward, so that the moving contact 241 rotates clockwise around the point O and then is separated from the fixed contact 242, thereby implementing switching-off.

As shown in FIG. 4 and FIG. 13, the circuit breaker 20 further includes an arc extinction module 27 located on a side that is of the arc-quenching chamber 25 and that is away from the current-carrying mechanism 24 in the depth direction d. The arc extinction module 27 is located in a 5^{th} layer (an arc extinction layer). The arc extinction module 27 is configured to purify a gas emitted from the arc-quenching chamber 25. An arc spraying nozzle is disposed between the arc extinction module 27 and the arc-quenching chamber 25, where the arc spraying nozzle is connected to the arc-quenching chamber 25 and the arc extinction module 27. In an embodiment, the electric power device 10 further includes a circuit board located in the cabinet 11, where the circuit board and the plurality of circuit breakers 20 are sequentially disposed in the depth direction D of the cabinet 11, and the circuit board is disposed close to the arc extinction module 27. The arc extinction module 27 may absorb electric ions emitted from the arc-quenching chamber 25, so that the gas emitted by the circuit breaker 20 through the arc extinction module 27 can be fully arc-free, thereby avoiding adverse impact on the circuit board of the electric power device 10.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric power device, comprising a cabinet and a plurality of circuit breakers and a plurality of power modules located in the cabinet, wherein the plurality of circuit breakers are sequentially disposed in the cabinet in a width direction of the cabinet, a height direction of the circuit breaker is the same as the width direction of the cabinet, a width direction of the circuit breaker is the same as a height direction of the cabinet, and a depth direction of the circuit breaker is the same as a depth direction of the cabinet;
the circuit breaker comprises a housing, an operating handle, an operating mechanism, a current-carrying component, and an arc-quenching chamber, wherein the operating handle is connected to the operating mechanism; the current-carrying component comprises a moving contact and a fixed contact, the moving contact is rotatable relative to the housing, and the fixed contact is located on a side that is of the moving contact and that is away from the operating mechanism in the depth direction of the circuit breaker; at least a portion that is of the operating handle and that is close to the operating mechanism, the operating mechanism, the moving contact, and the arc-quenching chamber are sequentially disposed in the housing in the depth direction of the circuit breaker; the operating handle is configured to control the operating mechanism to drive the moving contact to move, so that the moving contact is in contact with or separated from the fixed contact; and the arc-quenching chamber is configured to extinguish an electric arc that is generated when the moving contact is separated from the fixed contact;
the operating mechanism comprises a first mounting plate and a second mounting plate that are disposed opposite to each other in the width direction of the circuit breaker, and a lock assembly and at least one group of operating assemblies located between the first mounting plate and the second mounting plate, wherein the first mounting plate and the second mounting plate are separately fastened to the housing, and the operating handle is in rotary connection to the first mounting plate and the second mounting plate; and the lock assembly is configured to lock or unlock movement of the operating assembly;
the operating assembly comprises a jump buckle, an upper connecting rod, a lower connecting rod, and a spring, wherein the jump buckle is in rotary connection to the first mounting plate through a first fixed shaft; in the height direction of the circuit breaker, the lock assembly is located on one side of the first fixed shaft, and the upper connecting rod and the lower connecting rod are located on the other side of the first fixed shaft; one end of the upper connecting rod is in rotary connection to the jump buckle through a first rotating shaft, and the other end of the upper connecting rod is in rotary connection to one end of the lower connecting rod through a second rotating shaft; one end that is of the lower connecting rod and that is away from the upper connecting rod is connected to the moving contact; and one end of the spring is fastened to the operating handle, and the other end of the spring is fastened to the second rotating shaft; and
the first mounting plate is provided with a first position limiting post, wherein the first position limiting post is configured to limit rotation of the jump buckle and the upper connecting rod when the lock assembly unlocks the jump buckle; and the upper connecting rod is provided with a second position limiting post, wherein the second position limiting post is configured to limit a rotating angle of the jump buckle when the operating handle is closed or opened.

2. The electric power device according to claim 1, wherein the operating handle is pushed in the height direction of the circuit breaker, and when the operating handle is closed, the operating handle is close to the lock assembly.

3. The electric power device according to claim 1 or 2, wherein the jump buckle comprises a first part, a second part, and a third part that are of an integrated structure, the second part is located between the first part and the third part, the first part, the second part, and the third part are disposed in an S shape, the first part is disposed close to the lock assembly, the first fixed shaft is in rotary connection between the first part and the second part, and the third part is in rotary connection to the first rotating shaft;
the first position limiting post extends between the first part and the second part; and when the lock assembly unlocks the jump buckle, the jump buckle rotates around the first fixed shaft and drives the upper connecting rod to move until the first part of the jump buckle and the upper connecting rod separately abut against the first position limiting post, so that the jump buckle and the upper connecting rod stop rotating; and
the second position limiting post extends between the second part and the third part; and when the operating handle is closed, the operating handle drives, through the spring, the second rotating shaft to move, and movement of the second rotating shaft drives the upper connecting rod and the jump buckle sequentially to rotate until the second part of the jump buckle abuts against the second position limiting post, so that the jump buckle stops rotating; or when the operating handle is opened, the operating handle drives, through the spring, the third rotation to move, and movement of the second rotating shaft drives the upper connecting rod and the jump buckle sequentially to rotate until the third part of the jump buckle abuts against the second position limiting post, so that the jump buckle stops rotating.

4. The electric power device according to any one of claims 1 to 3, wherein the at least one group of operating assembly comprises a first operating assembly and a second operating assembly; and
the first mounting plate, the first operating assembly, the second operating assembly, and the second mounting plate are sequentially disposed in the width direction of the circuit breaker, wherein the lower connecting rod, the upper connecting rod, and the jump buckle of the first operating assembly are sequentially disposed in a direction away from the first mounting plate; and the lower connecting rod, the upper connecting rod, and the jump buckle of the second operating assembly are sequentially disposed in a direction away from the second mounting plate.

5. The electric power device according to claim 4, wherein the first rotating shaft of the first operating assembly and the first rotating shaft of the second operating assembly are of an integrated structure.

6. The electric power device according to claim 4 or 5, wherein the jump buckle of the first operating assembly and the jump buckle of the second operating assembly are of an integrated structure.

7. The electric power device according to any one of claims 1 to 6, wherein the lock assembly comprises a first-level lock connecting rod, a second-level lock connecting rod, and a third-level lock rotating shaft, the first-level lock connecting rod, the second-level lock connecting rod, and the third-level lock rotating shaft are separately in rotary connection to the first mounting plate, and the first-level lock connecting rod is located on a side that is of the second-level lock connecting rod and the third-level lock rotating shaft and that is close to the jump buckle; and
the third-level lock rotating shaft is configured to lock or unlock rotation of the second-level lock connecting rod relative to the housing; the second-level lock connecting rod is configured to lock or unlock rotation of the first-level lock connecting rod relative to the housing; and the first-level lock connecting rod is configured to lock or unlock rotation of the jump buckle relative to the housing.

8. The electric power device according to claim 7, wherein one end that is of the third-level lock rotating shaft and that is close to the second-level lock connecting rod is a semicircular end, one end that is of the second-level lock connecting rod and that is close to the third-level lock rotating shaft is provided with a lap portion, the lap portion is configured to be in lap connection to the circular end, and rotation of the second-level lock connecting rod is locked through the lap connection between the lap portion and the circular end; and
one end that is of the second-level lock connecting rod and that is close to the first-level lock connecting rod is configured to abut against the first-level lock connecting rod, to lock rotation of the first-level lock connecting rod.

9. The electric power device according to claim 8, wherein the lock assembly further comprises a torsional spring and a second fixed shaft, the second-level lock connecting rod is in rotary connection to the first mounting plate through the second fixed shaft, the torsional spring is in rotary connection to the second fixed shaft, and the torsional spring is fixed relative to the second-level lock connecting rod; and
when the lap connection between the lap portion and the circular end is unlocked, the torsional spring drives the second-level lock connecting rod to rotate, so that the second-level lock connecting rod is away from the first-level lock connecting rod, to unlock the rotation of the first-level lock connecting rod.

10. The electric power device according to claim 9, wherein the lock assembly further comprises a reset spring and a third fixed shaft, the reset spring is in rotary connection to the first mounting plate through the third fixed shaft, and the reset spring is fixed relative to the first-level lock connecting rod; and
one end that is of the second-level lock connecting rod and that is close to the jump buckle is configured to abut against the jump buckle; and when the second-level lock connecting rod is away from the first-level lock connecting rod, the reset spring drives the first-level lock connecting rod to rotate, so that the first-level lock connecting rod is away from the jump buckle, to unlock the rotation of the jump buckle.

11. The electric power device according to any one of claims 7 to 10, wherein the third-level lock rotating shaft is provided with a position limiting cylinder, the first mounting plate is provided with an arc-shaped guide slot, and the position limiting cylinder is accommodated in the arc-shaped guide slot and slides along the arc-shaped guide slot.

12. The electric power device according to any one of claims 7 to 11, wherein the second-level lock connecting rod comprises two connecting rods, and the two connecting rods are disposed opposite to each other and fastened.

13. The electric power device according to any one of claims 1 to 12, wherein the circuit breaker further comprises a tripping control assembly, the tripping control assembly is disposed on a side of the moving contact in the height direction of the circuit breaker, and the tripping control assembly is in transmission connection to the lock assembly; and the tripping control assembly is configured to: when a fault current is detected, control the lock assembly to drive the operating assembly to move, so that the moving contact is separated from the fixed contact.

14. A circuit breaker, wherein the circuit breaker comprises a housing, an operating handle, an operating mechanism, a current-carrying component, and an arc-quenching chamber;
the operating handle is connected to the operating mechanism; the current-carrying component comprises a moving contact and a fixed contact, the moving contact is rotatable relative to the housing, and the fixed contact is located on a side that is of the moving contact and that is away from the operating mechanism in a depth direction of the circuit breaker; at least a portion that is of the operating handle and that is close to the operating mechanism, the operating mechanism, the moving contact, and the arc-quenching chamber are sequentially disposed in the housing in the depth direction of the circuit breaker; the operating handle is configured to control the operating mechanism to drive the moving contact to move, so that the moving contact is in contact with or separated from the fixed contact; and the arc-quenching chamber is configured to extinguish an electric arc that is generated when the moving contact is separated from the fixed contact;
the operating mechanism comprises a first mounting plate and a second mounting plate that are disposed opposite to each other in a width direction of the circuit breaker, and a lock assembly and at least one group of operating assemblies located between the first mounting plate and the second mounting plate, wherein the first mounting plate and the second mounting plate are separately fastened to the housing, and the operating handle is in rotary connection to the first mounting plate and the second mounting plate; and the lock assembly is configured to lock or unlock movement of the operating assembly;
the operating assembly comprises a jump buckle, an upper connecting rod, a lower connecting rod, and a spring, wherein the jump buckle is in rotary connection to the first mounting plate through a first fixed shaft; in a height direction of the circuit breaker, the lock assembly is located on one side of the first fixed shaft, and the upper connecting rod and the lower connecting rod are located on the other side of the first fixed shaft; one end of the first upper connecting rod is in rotary connection to the jump buckle through a first rotating shaft, and the other end of the upper connecting rod is in rotary connection to one end of the lower connecting rod through a second rotating shaft; one end that is of the lower connecting rod and that is away from the upper connecting rod is connected to the moving contact; and one end of the spring is fastened to the operating handle, and the other end of the spring is fastened to the second rotating shaft; and
the first mounting plate is provided with a first position limiting post, wherein the first position limiting post is configured to limit rotation of the jump buckle and the upper connecting rod when the lock assembly unlocks the jump buckle; and the upper connecting rod is provided with a second position limiting post, wherein the second position limiting post is configured to limit a rotating angle of the jump buckle when the operating handle is closed or opened.
